(19) Europäisches Patentamt
European Patent Office
Office européen des brevets

(11) **EP 3 767 741 B1**

(12) **FASCICULE DE BREVET EUROPEEN**

(45) Date de publication et mention
de la délivrance du brevet:
**26.04.2023 Bulletin 2023/17**

(21) Numéro de dépôt: **20185508.7**

(22) Date de dépôt: **13.07.2020**

(51) Classification Internationale des Brevets (IPC):
*H01Q 1/12* *(2006.01)*   *H01Q 7/00* *(2006.01)*
*H01Q 9/22* *(2006.01)*   *H01Q 9/26* *(2006.01)*
*H01Q 21/20* *(2006.01)*   *H01Q 21/24* *(2006.01)*
*G01S 3/74* *(2006.01)*

(52) Classification Coopérative des Brevets (CPC):
**H01Q 9/22; G01S 3/74; H01Q 1/125; H01Q 7/00;
H01Q 9/265; H01Q 21/205; H01Q 21/24**

(54) **ANTENNE SPHÈRE**

SPHERE ANTENNE

SPHERE ANTENNA

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.07.2019 FR 1907914**

(43) Date de publication de la demande:
**20.01.2021 Bulletin 2021/03**

(73) Titulaire: **THALES**
**92400 Courbevoie (FR)**

(72) Inventeur: **HUBERT, William**
**49309 Cholet (FR)**

(74) Mandataire: **Lavoix**
**2, place d'Estienne d'Orves**
**75441 Paris Cedex 09 (FR)**

(56) Documents cités:
**EP-A2- 2 571 100      CN-A- 104 218 320
GB-A- 2 274 953       US-A- 5 300 885
US-A1- 2017 363 705   US-A1- 2018 076 523**

**Description**

La présente invention concerne une antenne sphère, à couverture en trois dimensions et adaptée à fonctionner dans une large bande de fréquences.

L'invention se situe dans le domaine des antennes large bande et trouve des applications dans le domaine de la radiogoniométrie.

Les applications de radiogoniométrie, nécessitant une couverture en élévation et en polarisation étendues, requièrent des mesures de champ électromagnétique suivant différentes directions de l'espace et suivant différentes polarisations.

En effet, les systèmes de radiogoniométrie modernes utilisent, pour la plupart, des données d'amplitude et de phase reçues par plusieurs éléments rayonnants associés en réseau formant un système antennaire. L'intégration de tels systèmes antennaires sur divers porteurs, pour un fonctionnement embarqué, implique de plus des contraintes de compacité. Ces contraintes sont difficiles à respecter, en particulier pour un fonctionnement en réception d'ondes électromagnétiques dans certaines bandes de fréquence comme les bandes UHF et VHF, s'étendant entre 30MHz et 3000 MHz.

Les documents CN 104281320A, US 5 300 885A, GB2274953A, EP 2571100A2, US2018/076523 A1 et US2017/363705A1 décrivent des antennes selon l'état de la technique.

Le document « Vector sensor processing of electromagnetic source localization » de A. Nehorai et al, publié dans Signals, Systems and Computers, IEEE 1991, pages 566-572, décrit une antenne vectorielle (en anglais « Vector Sensor Antenna »), composée de trois boucles électriquement petites et trois dipôles courts. Les trois dipôles sont orientés selon les trois axes d'un référentiel tridimensionnel orthogonal, classiquement désignés par (X,Y,Z) et permettent de capter les trois composantes des champs électriques (Ex, Ey et Ez) avec chaque fois une indétermination sur les composantes du champ magnétique associé, respectivement. Cette indétermination est levée par les trois boucles électriquement petites qui sont sensibles aux trois composantes du champ magnétique selon lesquelles leur normale est orientée. Néanmoins, dans une telle architecture, la définition des passages de câbles conducteurs, des accès aux antennes et la maîtrise des couplages des éléments rayonnants s'avèrent complexes. De plus, la nécessité d'utiliser des boucles électriquement petites ou des dipôles suffisamment courts impose une limitation au niveau de la bande de fonctionnement et des performances radioélectriques du système antennaire. Ainsi, un fonctionnement au-delà de 30MHz est difficilement envisageable.

L'invention a pour objet de remédier aux inconvénients de l'état de la technique, et de fournir une antenne avec une couverture spatiale étendue sur trois dimensions, adaptée à fonctionner dans une large bande de fréquences, supérieure ou égale à une décade, en particulier dans les domaines VHF et UHF, de bonne compacité pour une utilisation dans des systèmes embarqués.

A cet effet, l'invention propose une antenne sphère adaptée à fonctionner dans une large bande de fréquences selon la revendication 1.

Avantageusement, grâce à l'agencement d'antenne sphère proposé, à partir d'ensembles planaires formés d'éléments rayonnants formant des motifs élémentaires à rayonnement sectoriel, l'antenne proposée a un fonctionnement multi-sectoriel dans l'espace, et multi- polarisations.

L'antenne sphère selon l'invention peut présenter une ou plusieurs des caractéristiques des revendications 2 à 9, prises indépendamment ou selon toutes les combinaisons acceptables.

D'autres caractéristiques et avantages de l'invention ressortiront de la description qui en est donnée ci-dessous, à titre indicatif et nullement limitatif, en référence aux figures annexées, parmi lesquelles :

    [Fig 1] la figure 1 illustre schématiquement un élément rayonnant servant de motif élémentaire d'une antenne sphère réalisée selon un premier mode de réalisation ;
    [Fig 2] la figure 2 illustre schématiquement un ensemble planaire de motifs d'une antenne sphère selon un premier mode de réalisation;
    [Fig 3] la figure 3 illustre schématiquement un agencement de deux ensembles planaires selon la figure 2 ;
    [Fig 4] la figure 4 illustre schématiquement un agencement de trois ensembles planaires selon la figure 2;
    [Fig 5] la figure 5 illustre un deuxième mode de réalisation d'une antenne sphère selon l'invention ;
    [Fig 6] la figure 6 illustre une antenne sphère selon le deuxième mode de réalisation avec supports de pose ;
    [Fig 7] la figure 7 illustre schématiquement un ensemble planaire de motifs d'une antenne sphère selon un troisième mode de réalisation.

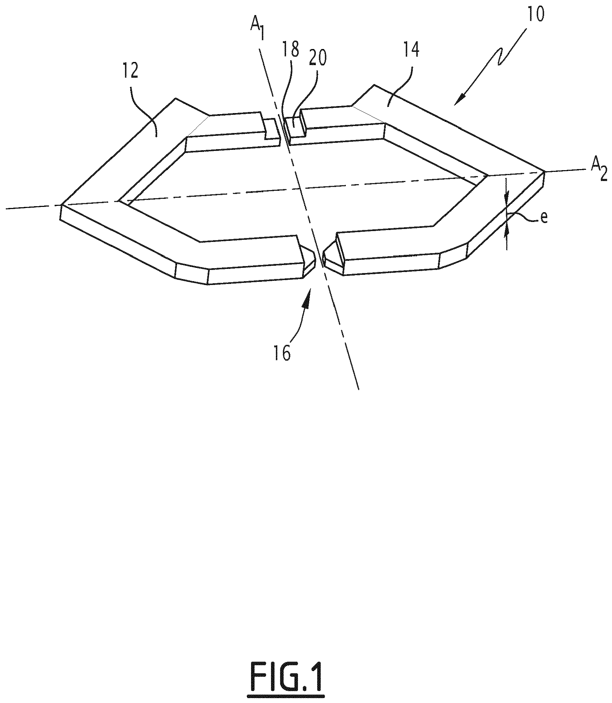

Les figures 1 à 4 illustrent schématiquement des éléments d'un premier mode de réalisation d'une antenne sphère selon l'invention, qui est dans ce mode de réalisation une antenne multi-accès à rayonnement multi-sectoriel.

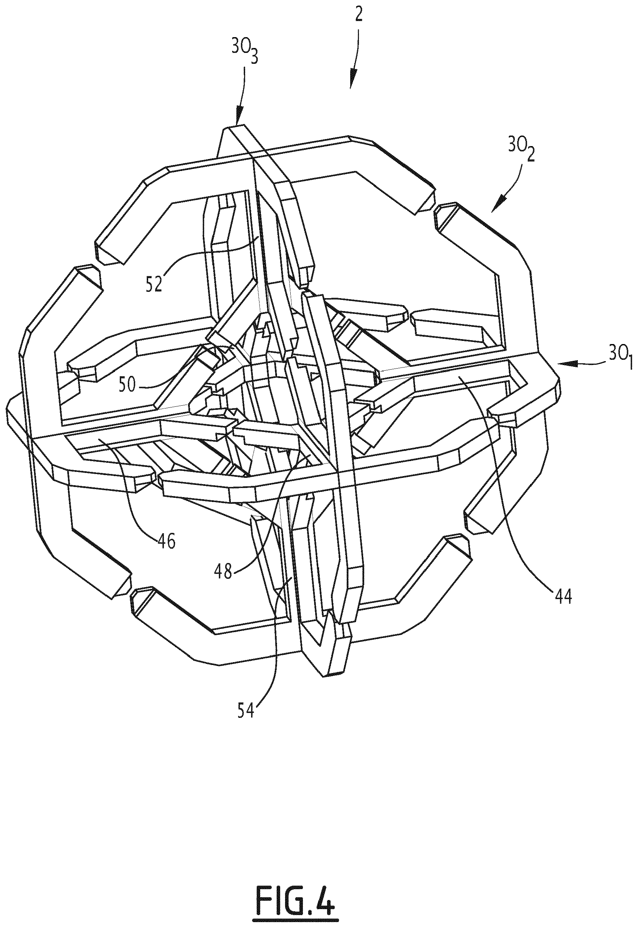

La figure 1 illustre schématiquement un élément rayonnant servant de motif élémentaire 10 d'une antenne sphère 2, illustrée à la figure 4, selon un premier mode de réalisation de l'invention.

Dans ce mode de réalisation, le motif élémentaire 10 est un élément rayonnant sectoriel de type dipôle replié-chargé.

Les motifs élémentaires seront appelés simplement motifs par la suite.

Le rayonnement sectoriel est caractérisé par la capacité d'une antenne à rayonner dans une direction privilégiée de l'espace, sans pour autant être trop directive, donc un rayonnement couvrant un secteur formé autour de la direction privilégiée.

Le motif 10 comporte deux brins 12, 14, de même forme géométrique et positionnés symétriquement par rapport à un premier axe central A1. Chaque brin 12, 14 est formé en un matériau conducteur d'électricité.

De préférence, chaque brin a une épaisseur e, petite par rapport au périmètre du motif élémentaire, par exemple moins de 10 % de ce périmètre.

Le motif 10 comporte un accès 16 et une charge 18, l'accès 16 étant disposé symétriquement par rapport à un deuxième axe A2, orthogonal à l'axe A1, les deux axes se croisant en un point de symétrie O, par rapport à la charge 18.

Les accès 16 sont destinés à être connectés à des voies de réception d'antenne (non représentés).

La forme géométrique du motif 10 est une forme sensiblement hexagonale dans ce mode de réalisation, choisie pour favoriser un agencement permettant d'obtenir une antenne de forme géométrique quasi-sphérique, comme décrit plus en détail ci-après.

Au niveau de la charge 18, dans chaque brin 12, 14 formant le motif 10, une encoche 20 est formée dans l'épaisseur du brin, permettant de réaliser un agencement des ensembles antennaires décrits ci-après.

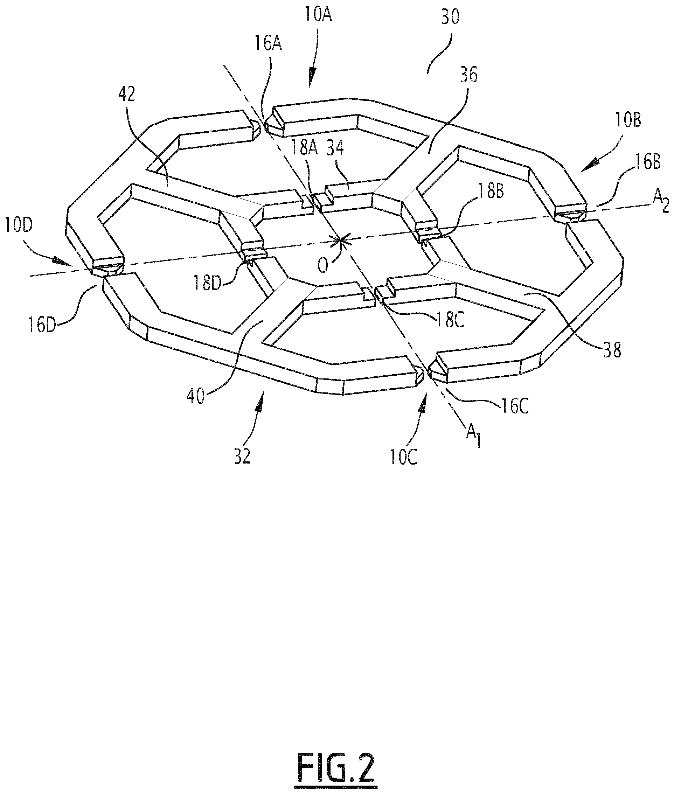

Des motifs élémentaires sont agencés pour former un ensemble antennaire appelé également ensemble planaire de motifs 30, comme illustré à la figure 2 dans le premier mode de réalisation.

L'ensemble planaire de motifs 30 est formé à partir de 4 motifs 10A, 10B, 10C, 10D, autour d'un centre de symétrie O.

Les motifs sont symétriques deux à deux par rapport à des axes A1, A2, dont l'intersection est le centre de symétrie O : les motifs 10A, 10C sont symétriques par rapport à l'axe A2, les motifs 10B, 10D sont symétriques par rapport à l'axe A1.

Ainsi, l'ensemble planaire de motifs 30 a une forme géométrique à symétrie circulaire autour du centre de symétrie O. Dans l'exemple illustré, l'ensemble planaire de motifs 30 a une forme octogonale, comportant une couronne extérieure 32 et une couronne intérieure 34.

Par exemple, dans un mode de réalisation, les dimensions de l'ensemble planaire de motifs sont choisies telles que le diamètre de la couronne extérieure 32 est de l'ordre de $\lambda/30$, où $\lambda$ est la longueur d'onde correspondant à la fréquence minimale de la bande de fréquence de fonctionnement de l'antenne. Par exemple, pour un fonctionnement dans une bande de fréquence VHF allant de 30MHz à 300MHz environ, la longueur d'onde $\lambda$ correspondant à 30MHz est d'environ 10 mètres, et donc le diamètre de la couronne extérieure 32 est d'environ 33 cm.

Les motifs sont agencés de manière à ce que les accès 16A, 16B, 16C, 16D soient sur la couronne extérieure 32 de l'ensemble planaire de motifs 30.

Les charges 18A, 18B, 18C, 18D sont situés sur la couronne intérieure 34 de l'ensemble planaire 30.

Les accès 16A, 16C (respectivement 16B, 16D) sont positionnés symétriquement par rapport au centre de symétrie O.

Les charges 18A, 18C (respectivement 18B, 18D) sont positionnées symétriquement par rapport au centre de symétrie O.

L'ensemble planaire de motifs 30 forme une antenne multi-accès multisectorielle, qui comporte 4 accès 16A, 16B, 16C, 16D.

Dans l'agencement formant l'ensemble planaire de motifs 30, chaque couple de motifs adjacents a une partie conductrice commune, formée par une portion de brin du dipôle chargé-replié du motif élémentaire correspondant.

Ainsi, les motifs 10A, 10B ont une partie conductrice 36 en commun ; les motifs 10B, 10C ont une partie conductrice 38 en commun ; les motifs 10C, 10D ont une partie conductrice 40 en commun ; les motifs 10D, 10A ont une partie conductrice 42 en commun.

Les parties conductrices 36, 38, 40, 42 sont dans ce mode de réalisation orientées selon des directions radiales partant du centre de symétrie O.

Les parties conductrices radiales communes permettent d'assurer la continuité électrique entre les motifs élémentaires.

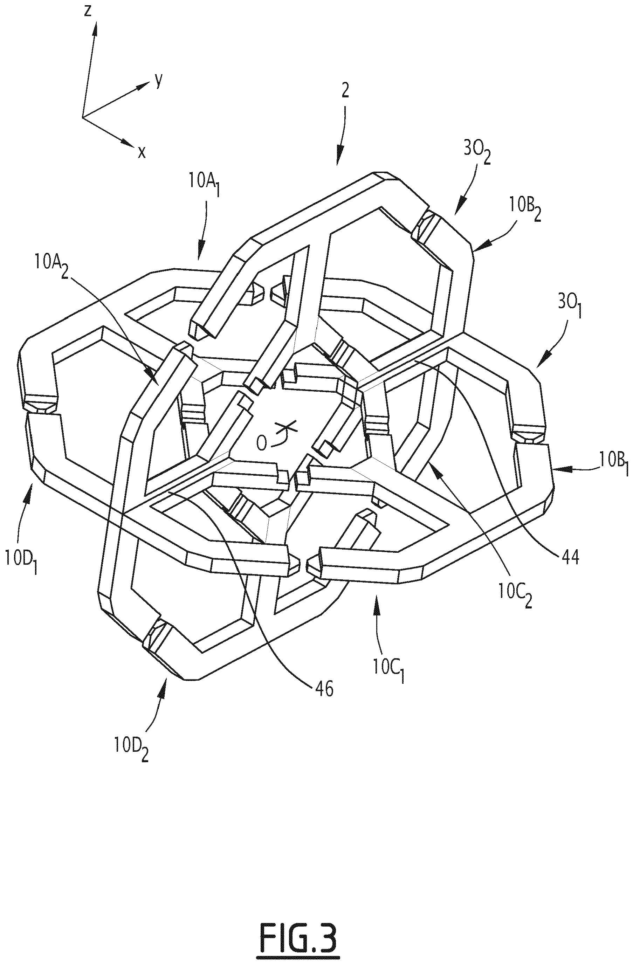

La figure 3 illustre un agencement de deux ensembles planaires de motifs $30_1$, $30_2$, analogues à l'ensemble planaire de motifs 30 décrit en référence à la figure 2, agencés de manière orthogonale l'un par rapport à l'autre, et de même centre de symétrie O.

La figure 3 illustre une étape intermédiaire dans l'agencement d'une antenne sphère 2 selon ce premier mode de réalisation.

Par exemple considérant un référentiel spatial orthonormal (O,x,y,z) centré au point O de symétrie, l'ensemble planaire de motifs $30_1$ est dans la plan (O,x, y) et l'ensemble planaire de motifs $30_2$ est dans la plan (O,y, z).

L'antenne formée par cet agencement comporte 8 accès, symétriques deux à deux par rapport au centre de symétrie O, et 8 charges symétriques deux à deux par rapport au centre de symétrie O.

L'agencement comporte des parties conductrices communes entre le premier ensemble planaire de motifs $30_1$ et le deuxième ensemble planaire de motifs $30_2$, références respectivement 44, 46. Chaque partie conductrice commune 44, 46 réunit des parties de brins appartenant à des motifs adjacents, d'une part dans le premier ensemble planaire de motifs $30_1$ et dans le deuxième ensemble planaire de motifs $30_2$.

Dans l'agencement illustré à la figure 3, grâce à la forme des motifs et de leur agencement dans les ensembles planaires, aucun motif n'est coupé par un autre motif, et par conséquent leurs diagrammes de rayonnement respectifs ne sont pas perturbés. En effet, l'intersection des ensembles planaires s'effectue sur des parties conductrices communes qui sont des portions de brins des motifs, ces portions de brin ne contenant ni accès, ni charge.

La figure 4 illustre une antenne sphère 2 selon ce premier mode de réalisation, formée par agencement de trois ensembles planaires de motifs $30_1$, $30_2$, $30_3$ analogues à l'ensemble planaire de motifs 30 décrit en référence à la figure 2, agencés de manière orthogonale l'un par rapport à l'autre, et de même centre de symétrie O.

En considérant le même référentiel spatial orthonormal (O,x,y,z) centré au point O de symétrie, un troisième ensemble planaire de motifs $30_3$ est agencé, dans le plan (O, x, z).

Les trois ensembles planaires $30_1$, $30_2$, 30s sont orthogonaux deux à deux, et de même centre de symétrie O.

Les premier ensemble planaire de motifs $30_1$ et deuxième ensemble planaire de motifs $30_2$ comportent deux parties 44, 46 conductrices communes, déjà décrites en référence à la figure 3.

Les premier ensemble planaire de motifs $30_1$ et troisième ensemble planaire de motifs 30s comportent deux parties 48, 50 conductrices communes, qui, de manière analogue, réunissent des parties de brins appartenant à des motifs élémentaires adjacents, d'une part dans le premier ensemble planaire de motifs $30_1$ et d'autre part dans le troisième ensemble planaire de motifs $30_3$.

Les deuxième ensemble planaire de motifs $30_2$ et troisième ensemble planaire de motifs 30s comportent deux parties 52, 54 conductrices communes, qui, de manière analogue, réunissent des parties de brins appartenant à des éléments rayonnants élémentaires adjacents, d'une part dans le deuxième ensemble planaire de motifs $30_2$ et d'autre part dans le troisième ensemble planaire de motifs 30s.

L'antenne sphère ainsi formée a 12 accès répartis selon des directions réparties régulièrement dans l'espace, et les éléments rayonnants élémentaires associés sont positionnés de manière à assurer une couverture sphérique autour du centre de l'antenne, selon une pluralité de polarisations.

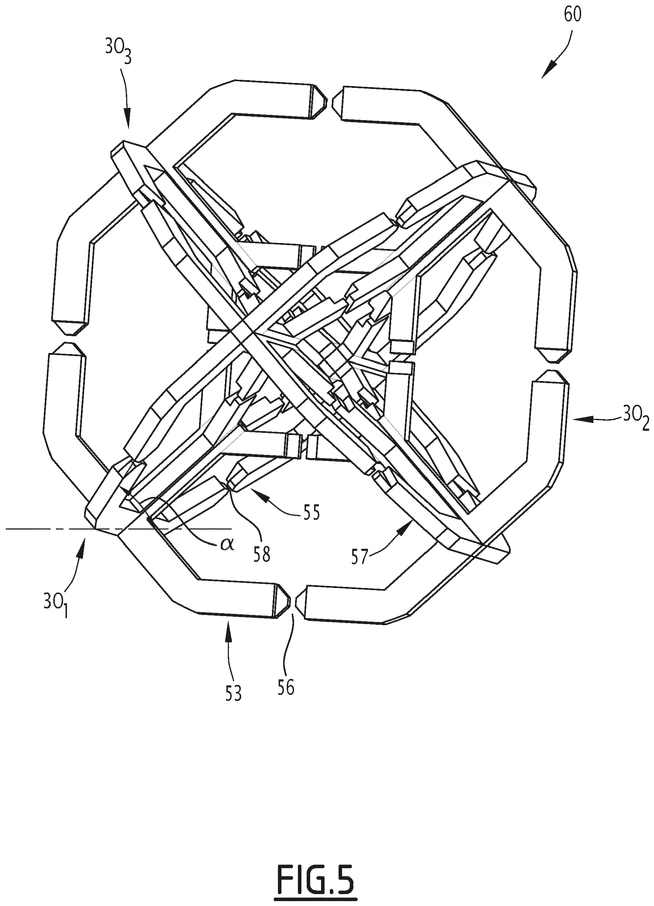

La figure 5 illustre une variante de réalisation d'une antenne sphère 60, qui est formée par un agencement de trois ensembles planaires de motifs $30_1$, $30_2$, $30_3$, également appelés ensembles antennaires, analogues à ceux décrits ci-dessus, l'agencement étant analogue à celui décrit en référence aux figures 3 et 4.

Mais dans ce mode de réalisation, l'agencement de l'antenne sphère 2 de la figure 4 est basculé d'un angle prédéterminé.

Le premier ensemble antennaire $30_1$ est basculé de manière à ce que le plan de l'ensemble antennaire $30_1$ formé un angle $\alpha$ par rapport au plan horizontal.

De préférence, l'angle $\alpha$ est sensiblement égal à $arcos(1/\sqrt{3})$ où arcos() est la fonction Arc cosinus, fonction réciproque de la fonction cosinus. En pratique, $\alpha$ est par exemple de l'ordre de 54,74°.

Le deuxième ensemble antennaire $30_2$ est également basculé pour former un angle $\alpha$ par rapport au plan horizontal, ainsi que le troisième ensemble antennaire $30_3$.

Dans cet agencement, l'antenne sphère 60 est adaptée à reposer sur des parties de support 53, 55, 57 appartenant respectivement à des motifs du premier ensemble antennaire $30_1$, du deuxième ensemble antennaire $30_2$, et du troisième ensemble antennaire $30_3$.

Chacune des parties de support comporte un accès du motif concerné, seuls les accès 56 et 58 étant visibles sur la figure 5.

Dans cet agencement, l'antenne sphère 60 est destinée à être posée sur les parties de support 53, 55, 57, par exemple fixée sur une surface plane d'un porteur.

Les trois accès des motifs comportant les parties de support 53, 55 et 57 ne sont pas fonctionnels dans ce mode de réalisation.

L'antenne sphère 60 a alors 9 accès fonctionnels.

Ce mode de réalisation a l'avantage de faciliter la fixation d'une antenne sphère sur un porteur, sans nuire en pratique aux performances de rayonnement. En effet, en pratique, lorsqu'une antenne de ce type est montée sur un porteur, il n'y a pas d'intérêt à capter un rayonnement électromagnétique dans la direction du porteur.

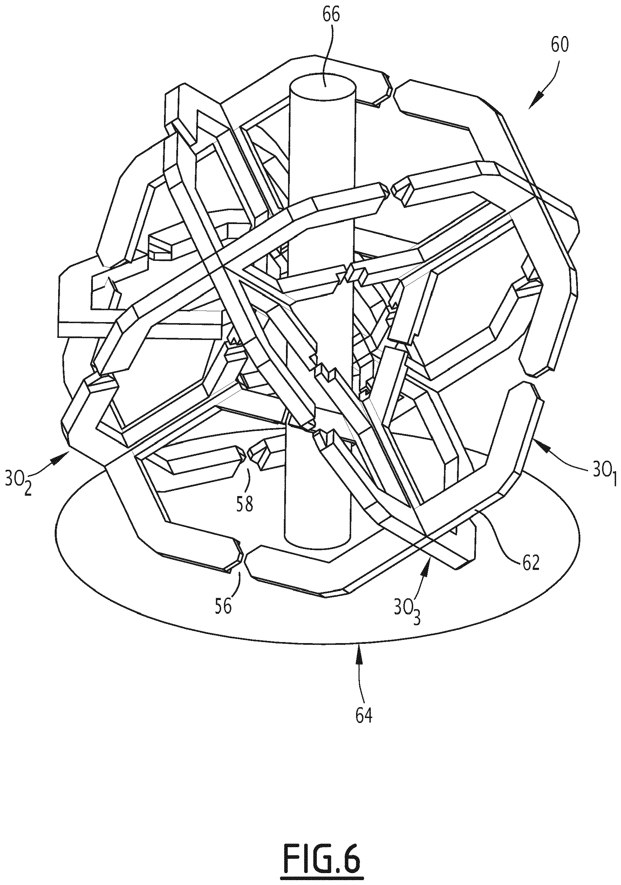

La figure 6 illustre l'antenne sphère 60 de la figure 5 posée sur un plateau de support 64, autour d'un mât 66.

Chaque ensemble planaire de motifs est placé selon une inclinaison d'un premier angle prédéterminé, égal à l'angle $\alpha$ de la figure 5, par rapport au plan du plateau de support.

Le mât de support 66 permet de stabiliser l'antenne sphère 60 lorsqu'elle est embarquée sur un porteur adapté à se déplacer par exemple.

De plus, grâce à la présence de ce mât, il est possible de positionner un autre système au-dessus de l'antenne sphère et de faire passer des câbles de connexion par le mât.

Le mât de support s'étend selon une direction prédéterminée, orthogonale au plan du plateau de support dans cet exemple. Il s'agit de la direction verticale dans l'exemple illustrée, parallèle à l'axe Oz dans un repère (O,x,y,z). Chaque ensemble planaire de motifs est placé de manière à former un deuxième angle prédéterminé $\beta$ par rapport à la direction du mât. Le deuxième angle prédéterminé est par exemple égal à 90°-$\alpha$.

Par exemple, le plateau de support est en matériau conducteur et le mât de support est en matériau isolant ou conducteur.

Avantageusement, grâce à l'agencement de l'antenne, le mât de support 66 traverse le centre de l'antenne sphère sans être en contact avec l'un quelconque des brins rayonnants formant les motifs élémentaires des ensembles planaires.

Comme expliqué en référence à la figure 5, les accès 56, 58, 62 en contact avec le plateau de support 64 ne sont pas utilisés.

Les 9 autres accès de l'antenne sphère 60 sont fonctionnels, connectés à des voies de réception non représentées, de manière à transmettre les données d'amplitude et de puissance reçues à un système de traitement permettant de réaliser par exemple des applications de radiogoniométrie.

Avantageusement, les modes de réalisation décrits ci-dessus présentent une antenne dans laquelle chaque ensemble planaire de motifs est formé à partir de quatre motifs élémentaires.

Selon une variante non représentée, il est possible d'envisager des motifs de forme géométrique différente, agencés par N=8, 12 ou 16. Comme dans le mode de réalisation décrit, dans un ensemble planaire de motifs, les motifs sont disposés de sorte à être deux à deux symétriques par rapport à un axe passant par le centre de symétrie O de l'antenne. La forme géométrique des motifs est choisie de manière à ce que les l'ensemble planaire formé par l'agencement des N motifs comporte une couronne extérieure sensiblement circulaire.

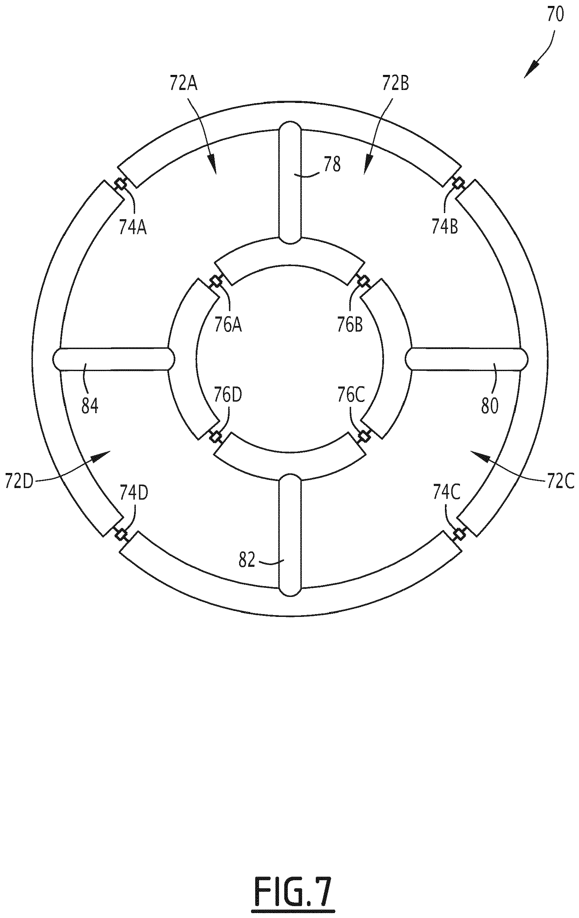

Selon un troisième mode de réalisation, une antenne sphère est formée selon le principe d'agencement décrit ci-dessus à partir d'un ensemble planaire de motifs multi-accès 70 montré à la figure 7.

L'ensemble planaire de motifs multi-accès 70 est du type décrit dans la demande de brevet EP 3 182 512 A1.

Il est à symétrie circulaire, composé de quatre motifs 72A, 72B, 72C, 72D, chacun comportant un accès 74A, 74B, 74C, 74D et une charge 76A, 76B, 76C, 76D.

Les motifs sont agencés de manière à ce que deux motifs adjacents de l'ensemble planaire de motifs ont une partie conductrice commune 78, 80, 82, 84.

Chaque motif élémentaire a une forme de secteur de disque dans ce mode de réalisation, les accès étant placés sur une couronne extérieure, et les charges sur une couronne intérieure. L'ensemble planaire de motifs comporte une couronne extérieure et une couronne intérieure, toutes deux de forme circulaire.

Une antenne sphère selon le troisième mode de réalisation est obtenue, par agencement de trois ensembles planaires analogues à l'ensemble planaire de motifs 70, agencés orthogonalement deux à deux, avec des parties conductrices communes selon des branches radiales.

Avantageusement, dans tous les modes de réalisation, l'antenne sphère proposée est adaptée pour fonctionner dans une large bande de fréquences, supérieure ou égale à une décade, par exemple de 30MHz à 300MHz.

## Revendications

1. Antenne sphère adaptée à fonctionner dans une large bande de fréquences, adaptée à émettre/recevoir un rayonnement électromagnétique dans une pluralité de directions de l'espace, composée d'une pluralité d'éléments rayonnants, comportant trois ensembles planaires de motifs (30, $30_1$, $30_2$, $30_3$, 70) ayant un même centre de symétrie (O), agencés dans trois plans de l'espace orthogonaux deux à deux, chaque ensemble planaire de motifs (30, $30_1$, $30_2$, 30s, 70) comportant au moins quatre éléments rayonnants (10, 10A, 10B,10C, 10D, 72A, 72B, 72C, 72D), formant des motifs élémentaires, à rayonnement sectoriel, agencés symétriquement deux à deux par rapport à des axes de symétrie ayant pour intersection ledit centre de symétrie (O), l'agencement des trois ensembles planaires de motifs étant effectué de manière à ce qu'aucun des motifs élémentaires ne soit coupé par un autre motif élémentaire, **caractérisée en ce que** chaque motif élémentaire (10, 10A, 10B,10C, 10D, 72A, 72B, 72C, 72D) est un dipôle replié-chargé, ayant un accès (16, 74A-74D) et une charge (18, 76A-76D), et dans laquelle, dans un ensemble planaire de motifs (30), deux motifs élémentaires ont une partie conductrice commune (36-42, 78-84), ladite antenne étant une antenne multi-accès.

2. Antenne selon la revendication 1, dans laquelle lesdites parties conductrices communes (36-42) sont agencées selon des branches radiales autour dudit centre de symétrie (O).

3. Antenne selon la revendication 1 ou 2, dans laquelle chaque ensemble planaire de motifs est formé par quatre motifs élémentaires (10A-10D, 72A-72D) agencés symétriquement deux à deux par rapport à des axes de symétrie orthogonaux.

4. Antenne selon la revendication 3, dans laquelle les quatre motifs élémentaires sont agencés pour former un ensemble planaire de motifs (30) comportant une couronne intérieure (34) et une couronne extérieure (32), comportant quatre accès (16A-16D) situés sur la couronne extérieure (32) et quatre charges (18A-18D) situées sur la couronne intérieure (34).

5. Antenne selon la revendication 4, dans laquelle chaque motif élémentaire (10, 10A-10D) a une forme géométrique hexagonale, ladite couronne extérieure (32) ayant une forme octogonale.

6. Antenne selon la revendication 4, dans laquelle chaque motif élémentaire (72A-72D) a une forme de quart d'anneau, ladite couronne extérieure étant circulaire.

7. Antenne selon l'une des revendications 1 à 6, comportant un plateau de support (64), une portion de chaque ensemble planaire de motifs ($30_1$, $30_2$, $30_3$) étant en contact sur le plateau de support (64), chaque ensemble planaire de motifs ($30_1$, $30_2$, $30_3$) étant placé de manière à former un premier angle de valeur prédéterminée entre le plan dudit ensemble planaire de motifs et le plan du plateau de support.

8. Antenne selon l'une des revendications 1 à 7, comportant un mât de support (66) traversant le centre de symétrie de l'antenne et s'étendant selon une direction prédéterminée, chaque ensemble planaire de motifs ($30_1$, $30_2$, $30_3$) étant placé de manière à former un deuxième angle de valeur prédéterminée entre le plan dudit ensemble planaire de motifs et ladite direction prédéterminée.

9. Antenne selon l'une des revendications 7 ou 8, dans laquelle ledit premier angle prédéterminé est égal à

$$\arccos(1/\sqrt{3})$$ .

**Patentansprüche**

1. Kugelantenne, die für einen Betrieb in einem breiten Frequenzband angepasst ist, zum Senden/Empfangen von elektromagnetischer Strahlung in einer Vielzahl von Raumrichtungen bestehend aus einer Vielzahl von Strahlungselementen, umfassend drei planare Sätze von Motiven (30, $30_1$, $30_2$, $30_3$, 70), die ein gleiches Symmetriezentrum (O) aufweisen, die in drei paarweise orthogonalen Raumebenen angeordnet sind, jeder planare Satz von Motiven (30, $30_1$, $30_2$, $30_3$, 70) umfassend mindestens vier strahlende Elemente (10, 10A, 10B, 10C, 10D, 72A, 72B, 72C, 72D), die Elementarmuster mit sektoraler Strahlung bilden, die paarweise symmetrisch in Bezug auf Symmetrieachsen angeordnet sind, deren Schnittpunkt das Symmetriezentrum (O) ist, wobei die Anordnung von drei planaren Motivgruppen derart erfolgt, dass keines der Elementarmotive durch ein anderes Elementarmotiv geschnitten wird, **dadurch gekennzeichnet, dass** jedes Elementarmotiv (10, 10A, 10B, 10C, 10D, 72A, 72B, 72C, 72D) ein gefalteter-geladener Dipol ist, der einen Zugang (16, 74A-74D) und eine Ladung (18, 76A-76D) aufweist, und wobei in einem planaren Satz von Motiven (30) zwei Elementarmotive einen gemeinsamen leitenden Abschnitt (36-42, 78-84) aufweisen, wobei die Antenne eine Multi-Access-Antenne ist.

2. Antenne nach Anspruch 1, wobei die gemeinsamen leitenden Teile (36-42) in radialen Zweigen um die Symmetriemitte (O) herum angeordnet sind.

3. Antenne nach Anspruch 1 oder 2, wobei jeder planare Satz von Motiven durch vier elementare Motive (10A-10D, 72A-72D) gebildet wird, die paarweise symmetrisch in Bezug auf orthogonale Symmetrieachsen angeordnet sind.

4. Antenne nach Anspruch 3, wobei die vier Elementarmuster angeordnet sind, um eine planare Motivanordnung (30) zu bilden, umfassend einen inneren Kranz (34) und einen äußeren Kranz (32) umfassend vier Zugänge (16A-16D), die sich auf dem äußeren Kranz (32) befinden, und vier Ladungen (18A-18D), die sich auf dem inneren Kranz (34) befinden.

5. Antenne nach Anspruch 4, wobei jedes Elementarmotiv (10, 10A-10D) eine hexagonale geometrische Form aufweist, wobei der äußere Kranz (32) eine achteckige Form aufweist.

6. Antenne nach Anspruch 4, wobei jedes Elementarmotiv (72A-72D) die Form eines Viertelrings aufweist und der äußere Kranz kreisförmig ist.

7. Antenne nach einem der Ansprüche 1 bis 6, umfassend eine Trägerplatte (64), wobei ein Abschnitt von jedem planaren Satzes von Motiven ($30_1$, $30_2$, $30_3$) auf der Trägerplatte (64) in Kontakt ist, wobei jeder planare Satz von Motiven ($30_1$, $30_2$, $30_3$) angeordnet ist, um einen ersten Winkel mit einem vorbestimmten Wert zwischen der Ebene des planaren Satzes von Motiven und der Ebene der Trägerplatte zu bilden.

8. Antenne nach einem der Ansprüche 1 bis 7, umfassend einen Trägermast (66), der durch das Symmetriezentrum der Antenne verläuft und sich in einer vorbestimmten Richtung erstreckt, wobei jeder planare Satz von Motiven ($30_1$, $30_2$, $30_3$) angeordnet ist, um einen zweiten Winkel mit einem vorbestimmten Wert zwischen der Ebene des planaren Satzes von Motiven und der vorbestimmten Richtung zu bilden.

9. Antenne nach einem der Ansprüche 7 oder 8, wobei der erste vorbestimmte Winkel gleich

$$\arccos(1/\sqrt{3})$$ ist.

**Claims**

1. A sphere antenna suitable for operating in a very wide frequency band, suitable for transmitting/receiving electromagnetic radiation in a plurality of spatial directions, made up of a plurality of radiating elements, comprising three planar sets of patterns (30, $30_1$, $30_2$, $30_3$, 70) having a same center of symmetry (O), arranged in three planes of the orthogonal space in pairs, each planar set of patterns (30, $30_1$, $30_2$, $30_3$, 70) comprising at least four radiating elements (10, 10A, 10B, 10C, 10D, 72A, 72B, 72C, 72D), forming elementary patterns, with sector-specific radiation, arranged symmetrically in pairs relative to axes of symmetry intersecting at said center of symmetry (O), the arrangement of the three planar sets being done such that none of the elementary patterns is intersected by another elementary pattern, **characterized in that** each elementary pattern (10, 10A, 10B, 10C, 10D, 72A, 72B, 72C, 72D) is a folded-charged dipole, having an access (16, 74A-74D) and a charge (18, 76A-76D), and wherein, in a planar set of patterns (30), two elementary patterns having a shared conductive part (36-42, 78-84), said antenna being a multi-access antenna.

$$\arccos(1/\sqrt{3})$$ .

2.  The antenna according to claim 1, wherein said shared conductive parts (36-42) are arranged along radial branches around said center of symmetry (O).

3.  The antenna according to claim 1 or 2, wherein each planar set of patterns is formed by four elementary patterns (10A-10D, 72A-72D) arranged symmetrically in pairs relative to orthogonal axes of symmetry.

4.  The antenna according to claim 3, wherein the four elementary patterns are arranged to form a planar set of patterns (30) including an inner ring (34) and an outer ring (32), comprising four accesses (16A-16D) located on the outer ring (32) and four charges (18A-18D) located on the inner ring (34).

5.  The antenna according to claim 4, wherein each elementary pattern (10, 10A-10D) has a hexagonal geometric shape, said outer ring (32) having an octagonal shape.

6.  The antenna according to claim 4, wherein each elementary pattern (72A-72D) has a quarter-ring shape, said outer ring being circular.

7.  The antenna according to one of claims 1 to 6, comprising a support plate (64), a portion of each planar set of patterns ($30_1$, $30_2$, $30_3$) being in contact on the support plate (64), each planar set of patterns ($30_1$, $30_2$, $30_3$) being placed so as to form a first angle of predetermined value between the plane of said planar set of patterns and the plane of the support plate.

8.  The antenna according to one of claims 1 to 7, comprising a support mast (66) passing through the center of symmetry of the antenna and extending in a predetermined direction, each planar set of patterns ($30_1$, $30_2$, $30_3$) being placed so as to form a second angle of predetermined value between the plane of said planar set of patterns and said predetermined direction.

9.  The antenna according to one of claims 7 or 8, wherein said first predetermined angle is equal to

<u>FIG.1</u>

## FIG.2

## FIG.3

FIG.4

## FIG.5

## FIG.6

## FIG.7

## RÉFÉRENCES CITÉES DANS LA DESCRIPTION

**Documents brevets cités dans la description**

- CN 104281320 A
- US 5300885 A
- GB 2274953 A
- EP 2571100 A2
- US 2018076523 A1
- US 2017363705 A1
- EP 3182512 A1

**Littérature non-brevet citée dans la description**

- **A. NEHORAI et al.** Vector sensor processing of electromagnetic source localization. *Signals, Systems and Computers, IEEE,* 1991, 566-572